# FASCICULE DE BREVET EUROPEEN

(11) **EP 4 382 433 B1**
(45) Date de publication et mention de la délivrance du brevet: **18.06.2025**
(21) Numéro de dépôt: 23209277.5
(22) Date de dépôt: 11.11.2023
(51) Int. Cl.: B64D 37/20, B64D 37/30, B64D 37/32, F17C 13/00, F17C 13/08

(54) **AÉRONEF COMPRENANT AU MOINS UN DISPOSITIF D'ALIMENTATION EN HYDROGÈNE COMPRENANT UN RÉSERVOIR D'HYDROGÈNE AINSI QUE DES ÉQUIPEMENTS RÉPARTIS DANS AU MOINS UN CONTENANT RELIÉ AU RÉSERVOIR ET AU MOINS UN CONTENANT AMOVIBLE**
LUFTFAHRZEUG MIT MINDESTENS EINER WASSERSTOFFVERSORGUNGSVORRICHTUNG MIT EINEM WASSERSTOFFSPEICHER SOWIE IN MINDESTENS EINEM SPEICHERFESTEN BEHÄLTER UND MINDESTENS EINEM ABNEHMBAREN BEHÄLTER VERTEILT ANGEORDNETEN EINRICHTUNGEN
AIRCRAFT COMPRISING AT LEAST ONE HYDROGEN SUPPLY DEVICE COMPRISING A HYDROGEN TANK AND DEVICES DISTRIBUTED IN AT LEAST ONE CONTAINER CONNECTED TO THE TANK AND AT LEAST ONE REMOVABLE CONTAINER

(30) Priorité: 05.12.2022 FR 2212738
(43) Date de publication de la demande: 12.06.2024
(73) Titulaire: AIRBUS OPERATIONS (S.A.S.), 31060 Toulouse (FR); Airbus Operations Limited, Bristol BS34 7PA (GB)
(72) Inventeur: SICK, Frédéric, 31060 TOULOUSE (FR); LAVERNE, Julien, 31060 TOULOUSE (FR); WESOLY, Thomas, 31670 LABEGE (FR); WEST, Nicholas, BRISTOL, BS34 7PA (GB)
(74) Mandataire: Fantin, Laurent

(56) Documents cités:
- EP-A1- 4 037 046
- WO-A1-2015/040268
- US-A1- 2012 248 251
- US-A1- 2015 298 811
- US-A1- 2022 163 170

## Description

La présente demande se rapporte à un aéronef comprenant au moins un dispositif d'alimentation en hydrogène comprenant un réservoir d'hydrogène assemblé à l'aéronef ainsi que des équipements répartis dans au moins un contenant relié au réservoir et au moins un contenant amovible.

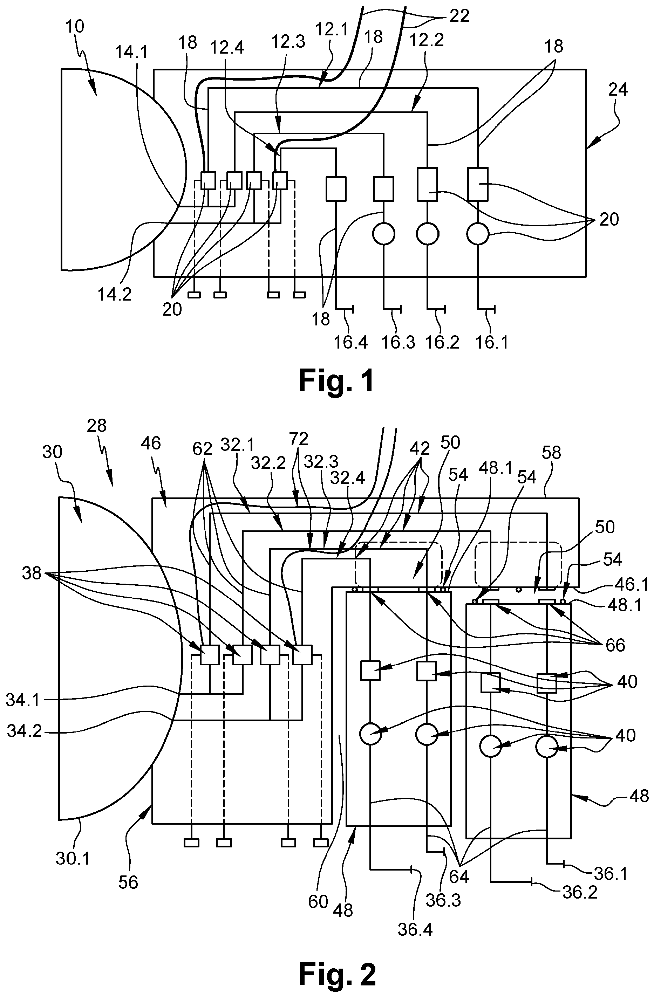

Comme illustré sur la figure 1, un dispositif d'alimentation en hydrogène d'un aéronef comprend au moins un réservoir d'hydrogène 10 ainsi que plusieurs circuits d'hydrogène 12.1 à 12.4 présentant chacun au moins une extrémité amont 14.1 à 14.2 reliée au réservoir d'hydrogène10 et au moins une extrémité aval 16.1 à 16.4 reliée notamment à au moins un moteur à hydrogène ou à au moins une pile à combustible.

Les notions amont et aval font référence au sens d'écoulement de l'hydrogène dans chacun des circuit d'hydrogène, qui s'écoule de l'amont vers l'aval.

Chaque circuit d'hydrogène 12.1 à 12.4 comprend des conduits 18 ainsi que différents équipements 20, comme des pompes, des capteurs, des vannes ou des échangeurs par exemple, reliés entre eux par les conduits 18.

Le dispositif d'alimentation en hydrogène peut comprendre au moins un câble électrique 22 relié à au moins un équipement 20.

Selon une configuration, l'hydrogène est stocké dans le réservoir d'hydrogène 10 à l'état cryogénique et le dispositif d'alimentation en hydrogène comprend une pompe haute pression pour mettre en pression l'hydrogène ainsi qu'un échangeur thermique configuré pour réchauffer l'hydrogène qui passe de l'état liquide à l'état gazeux.

Les conduits 18 sont des tuyaux à double peau pour empêcher toute fuite d'hydrogène. Certains équipements 20, comme certaines vannes par exemple, sont configurés pour assurer un niveau de sécurité élevé en matière de fuite d'hydrogène. Pour d'autres équipements 20, comme les pompes par exemple, il s'avère complexe d'obtenir un niveau de sécurité élevé en matière de fuite d'hydrogène ou cela conduit à des coûts élevés pour ces équipements.

Par conséquent, comme illustré sur la figure 1, les équipements 20, les conduits 18 ainsi que les câbles électriques 22 sont positionnés dans un contenant 24 étanche à l'air dans lequel un gaz inerte est injecté ou un vide est réalisé.

Ce contenant 24 est relié de manière étanche au réservoir d'hydrogène 10.

Pour pouvoir réaliser des opérations de maintenance ou de réparation concernant les équipements 20 positionnés dans le contenant 24, il est nécessaire de démonter le réservoir d'hydrogène 10 et le contenant 24 pour les sortir de l'aéronef afin de pouvoir ouvrir le contenant 24 et accéder aux équipements 20. Une fois l'opération de maintenance ou de réparation effectuée, le réservoir d'hydrogène 10 et le contenant 24 sont remontés dans l'aéronef.

Ce mode de réalisation n'est pas satisfaisant car il conduit à des temps d'immobilisation de l'aéronef importants.

Le document US2015/0298811 propose une unité à énergie qui comprend un premier chariot supportant une unité de stockage ainsi qu'un deuxième chariot supportant une unité de piles à combustible, les unités de stockage et de pile à combustible pouvant être accouplées.

Le document EP4037046 propose un dispositif de regroupement de piles à combustible comprenant au moins deux piles à combustible, un support sur lequel sont positionnées les différentes piles à combustible, une nourrice configurée pour alimenter les piles à combustible ainsi qu'un collecteur configurée pour collecter un fluide en sortie des piles à combustible, le support comportant un carter, le collecteur et la nourrice étant solidaires du carter et positionnés entre le carter et les piles à combustible.

La présente invention vise à remédier à tout ou partie des inconvénients de l'art antérieur.

A cet effet, l'invention a pour objet un aéronef comprenant au moins un dispositif d'alimentation en hydrogène comprenant au moins un réservoir d'hydrogène assemblé à l'aéronef, au moins un circuit d'hydrogène ainsi qu'au moins un contenant amont solidaire du réservoir d'hydrogène.

Selon l'invention, le dispositif d'alimentation en hydrogène comprend au moins un contenant aval amovible, les contenants amont et aval étant configurés pour occuper un état assemblé dans lequel les contenants amont et aval sont reliés et un état détaché dans lequel les contenants amont et aval sont désolidarisés, le circuit d'hydrogène comportant un tronçon amont positionné dans le contenant amont, un tronçon aval positionné dans le contenant aval ainsi qu'un premier système de raccordement reliant les tronçons amont et aval lorsque les contenants amont et aval sont à l'état assemblé.

Ainsi, chaque contenant aval peut être démonté et sorti de l'aéronef sans qu'il soit nécessaire de démonter le réservoir d'hydrogène. Cette solution contribue à améliorer la maintenance des contenants aval et, in fine, du dispositif d'alimentation en hydrogène.

Selon une caractéristique préférée, les contenants amont et aval comprennent respectivement des faces de jonction amont et aval positionnées au niveau d'une zone de jonction et rapprochées l'une de l'autre dans l'état assemblé, le premier système de raccordement étant positionné à proximité de la zone de jonction lorsque les contenants amont et aval sont à l'état assemblé.

Selon une autre caractéristique préférée, le dispositif d'alimentation en hydrogène comprend au moins un contenant intermédiaire amovible et intercalé entre les contenants amont et aval, les contenants amont et intermédiaire étant configurés pour occuper un état assemblé dans lequel les contenants amont et intermédiaire sont rapprochés l'un de l'autre dans une première zone de jonction ainsi qu'un état détaché dans lequel les contenants amont et intermédiaire sont écartés, les contenants aval et intermédiaire étant configurés pour occuper un état assemblé dans lequel les contenants aval et intermédiaire sont rapprochés l'un de l'autre dans une deuxième zone de jonction ainsi qu'un état détaché dans lequel les contenants aval et intermédiaire sont écartés. En complément, le circuit d'hydrogène comporte un tronçon intermédiaire intercalé entre les tronçons amont et aval et positionné dans le contenant intermédiaire, un premier système de raccordement, reliant les tronçons amont et intermédiaire, positionné au niveau de la première zone de jonction ainsi qu'un deuxième système de raccordement, reliant les tronçons aval et intermédiaire, positionné au niveau de la deuxième zone de jonction.

Selon une autre caractéristique préférée, le dispositif d'alimentation en hydrogène comprend au moins un câble électrique comportant un tronçon pour chaque contenant parmi des contenants amont, aval et intermédiaire dans lequel le câble électrique est présent ainsi qu'un connecteur reliant les différents tronçons deux à deux.

Selon une autre caractéristique préférée, chacun des contenants amont et aval est étanche au gaz et contient une atmosphère de protection.

Selon une autre caractéristique préférée, pour au moins une zone de jonction, chaque système de raccordement comprend une première partie solidaire d'un premier tronçon parmi un tronçon amont, un tronçon aval et si présent un tronçon intermédiaire, positionné dans un premier contenant parmi un contenant amont, un contenant aval et si présent un contenant intermédiaire ainsi qu'une deuxième partie solidaire d'un deuxième tronçon parmi un tronçon amont, un tronçon aval et si présent un tronçon intermédiaire, positionné dans un deuxième contenant parmi un contenant amont, un contenant aval et si présent un contenant intermédiaire ; les première et deuxième parties étant configurées pour occuper un état connecté dans lequel les première et deuxième parties coopèrent et assurent une continuité fluidique entre les premier et deuxième tronçons ainsi qu'un état déconnecté dans lequel les première et deuxième parties sont écartées. En complément, les premier et deuxième contenants comprennent des première et deuxième parois rapprochées l'une de l'autre lorsque les premier et deuxième contenants sont dans un état assemblé.

Selon une autre caractéristique préférée, la première partie de chaque système de raccordement est positionnée au niveau de la première paroi et reliée de manière étanche à cette dernière. En complément, la deuxième partie de chaque système de raccordement est positionnée au niveau de la deuxième paroi et reliée de manière étanche à cette dernière.

Selon une autre caractéristique préférée, la première partie de chaque système de raccordement est positionnée à l'extérieur du premier contenant, le premier tronçon relié à la première partie traversant de manière étanche la première paroi. En complément, la deuxième partie de chaque système de raccordement est positionnée à l'intérieur du deuxième contenant, la deuxième paroi du deuxième contenant comprenant au moins un orifice traversant configuré pour permettre à la première partie de chaque système de raccordement de pénétrer dans le deuxième contenant.

Selon une autre caractéristique préférée, la première partie de chaque système de raccordement est positionnée à l'extérieur du premier contenant, le premier tronçon relié à la première partie traversant de manière étanche la première paroi. En complément, la deuxième partie de chaque système de raccordement est positionnée à l'intérieur du deuxième contenant, la deuxième paroi du deuxième contenant comprenant au moins un orifice traversant configuré pour permettre au premier contenant d'être positionné dans le deuxième contenant. En complément, le dispositif d'alimentation en hydrogène comprend une plaque reliée au premier contenant et configurée pour obturer de manière étanche au gaz l'orifice traversant lorsque le premier contenant est positionné dans le deuxième contenant.

Selon une autre caractéristique préférée, le deuxième contenant comprend au moins une ouverture positionnée de manière à pouvoir accéder aux systèmes de raccordement depuis une zone extérieure du deuxième contenant ainsi qu'une trappe configurée pour occuper un état fermé dans lequel la trappe ferme de manière étanche l'ouverture et un état ouvert dans lequel la trappe dégage l'ouverture.

Selon une autre caractéristique préférée, le premier contenant comprend une cloison scindant le premier contenant en un premier compartiment situé entre la cloison et la première paroi ainsi qu'un deuxième compartiment distant de la première paroi, la première partie de chaque système de raccordement étant positionnée dans le premier compartiment, le premier tronçon relié à la première partie traversant de manière étanche la cloison. En complément, la première paroi comprend au moins un orifice traversant pour permettre à la deuxième partie de chaque système de raccordement du deuxième contenant de pénétrer dans le premier compartiment.

Selon une autre caractéristique préférée, le premier contenant comprend au moins une première ouverture positionnée de manière à pouvoir accéder aux systèmes de raccordement depuis une zone extérieure du premier contenant ainsi qu'une première trappe configurée pour occuper un état fermé dans lequel la première trappe ferme de manière étanche la première ouverture et un état ouvert dans lequel la première trappe dégage la première ouverture.

Selon une autre caractéristique préférée, le dispositif d'alimentation en hydrogène comprend, pour chaque premier contenant, un logement solidaire du deuxième contenant et dans lequel est positionnée la deuxième partie de chaque système de raccordement, le logement étant configuré pour loger une partie du premier contenant.

Selon une autre caractéristique préférée, le logement comprend au moins une deuxième ouverture positionnée au droit de la première ouverture lorsque les premier et deuxième contenants sont dans l'état assemblé ainsi qu'une deuxième trappe configurée pour occuper un état fermé dans lequel la deuxième trappe ferme de manière étanche la deuxième ouverture et un état ouvert dans lequel la deuxième trappe dégage la deuxième ouverture.

Selon une autre caractéristique préférée, le dispositif d'alimentation en hydrogène comprend au moins une étanchéité intercalée entre d'une part le premier contenant et d'autre part le deuxième contenant et/ou le logement.

D'autres caractéristiques et avantages ressortiront de la description de l'invention qui va suivre, description donnée à titre d'exemple uniquement, en regard des dessins annexés parmi lesquels :
- La figure 1 est une vue schématique d'un dispositif d'alimentation en hydrogène illustrant un mode de réalisation de l'art antérieur,
- La figure 2 est une vue schématique d'un dispositif d'alimentation en hydrogène illustrant un mode de réalisation de l'invention,
- La figure 3 est une vue schématique d'un dispositif d'alimentation en hydrogène illustrant un autre mode de réalisation de l'invention,
- La figure 4 est une représentation schématique des différentes étapes d'assemblage de deux contenants visibles sur la figure 3,
- La figure 5 est une vue schématique d'un dispositif d'alimentation en hydrogène illustrant un autre mode de réalisation de l'invention,
- La figure 6 est une vue schématique d'un dispositif d'alimentation en hydrogène illustrant un autre mode de réalisation de l'invention,
- La figure 7 est une représentation schématique des différentes étapes d'assemblage de deux contenants visibles sur la figure 6.

Selon les différents modes de réalisation visibles sur les figures 2 à 7, un dispositif d'alimentation en hydrogène 28 comprend au moins un réservoir d'hydrogène 30 ainsi qu'au moins un circuit d'hydrogène 32.1 à 32.4 présentant au moins une extrémité amont 34.1 à 34.2 reliée au réservoir d'hydrogène 30 et au moins une extrémité aval 36.1 à 36.4 reliée par exemple à au moins un moteur à hydrogène ou à au moins une pile à combustible.

Selon un mode de réalisation, le réservoir d'hydrogène 30 comprend une paroi latérale cylindrique 30.1 ainsi que des parois d'extrémité positionnées à chaque extrémité de la paroi latérale cylindrique 30.1. Le réservoir d'hydrogène 30 n'est pas plus décrit car il peut être identique à ceux de l'art antérieur.

Un circuit d'hydrogène 32.1 à 32.4 peut comprendre une ou plusieurs extrémité(s) amont 34.1, 34.2. Plusieurs circuits d'hydrogène 32.1 à 32.4 peuvent avoir la même extrémité amont 34.1, 34.2. De la même manière, un circuit d'hydrogène 32.1 à 32.4 peut comprendre une ou plusieurs extrémité(s) aval 36.1 à 36.4. Plusieurs circuits d'hydrogène 32.1 à 32.4 peuvent avoir la même extrémité aval.

A titre d'exemple et de manière non limitative, le dispositif d'alimentation en hydrogène 28 comprend quatre circuits d'hydrogène 32.1 à 32.4 qui présentent chacun une extrémité aval 36.1 à 36.4, les premier et deuxième circuits d'hydrogène 32.1, 32.1 présentant la même extrémité amont 34.1, les troisième et quatrième circuits d'hydrogène 32.3, 32.4 présentant la même extrémité amont 34.2.

Le dispositif d'alimentation en hydrogène 28 comprend des premiers et deuxièmes équipements 38, 40 ainsi que des conduits 42 reliant les premiers et deuxièmes équipements 38, 40 et permettant, pour chaque circuit d'hydrogène 32.1 à 32.4, d'acheminer l'hydrogène de l'extrémité amont 34.1, 34.2 jusqu'à l'extrémité aval 36.1 à 36.4 en traversant les premiers et deuxièmes équipements 38, 40.

Les premiers et deuxièmes équipements 38, 40 sont choisis parmi une liste d'équipements comprenant notamment des vannes, des capteurs, des pompes, des échangeurs thermiques, des évaporateurs, des systèmes de raccordement ou autres. Cette liste n'est pas exhaustive. Les premiers équipements 38, comme certaines vannes par exemple, appartiennent à une première catégorie d'équipements et sont configurés pour assurer un niveau de sécurité élevé en matière de fuite d'hydrogène. Selon une configuration, chaque premier équipement 38 comprend au moins un boîtier étanche ainsi qu'au moins un composant, en contact avec le fluide en fonctionnement, positionné dans le boîtier étanche.

Les deuxièmes équipements 40, comme certaines pompes par exemple, appartiennent à une deuxième catégorie d'équipements et ne sont pas configurés pour assurer un niveau de sécurité élevé en matière de fuite d'hydrogène

Selon un agencement, chaque circuit d'hydrogène 32.1 à 32.4 comprend au moins un premier équipement 38 ainsi qu'au moins un deuxième équipement 40.

Entre leurs extrémités amont et aval 34.1, 34.2, 36.1 à 36.4, les circuits d'hydrogène peuvent être distincts, présenter au moins un tronçon commun et/ou être reliés par des conduits de raccordement.

Selon un mode de réalisation visible sur la figure 2, le dispositif d'alimentation en hydrogène 28 comprend au moins un contenant amont 46 solidaire du réservoir d'hydrogène 30, au moins un contenant aval 48 amovible, les contenants amont et aval 46, 48 comprenant respectivement des faces de jonction amont et aval 46.1, 48.1 au niveau d'une zone de jonction 50, les contenants amont et aval 46, 48 étant configurés pour occuper un état assemblé dans lequel la face de jonction aval 48.1 du contenant aval 48 et la face de jonction amont 46.1 du contenant amont 46 sont rapprochées l'une de l'autre (voire en contact l'une contre l'autre), ainsi qu'un état détaché dans lequel la face de jonction aval 48.1 du contenant aval 48 et la face de jonction amont 46.1 du contenant amont 46 sont écartées.

Chacun des contenants amont et aval 46, 48 comprend au moins une paroi délimitant une zone intérieure et une zone extérieure. Chacun des contenants amont et aval 46, 48 est étanche au gaz et contient une atmosphère de protection au moins lorsque les contenants amont et aval 46, 48 sont dans l'état assemblé. L'atmosphère de protection peut être un niveau de vide poussé ou un gaz inerte par exemple.

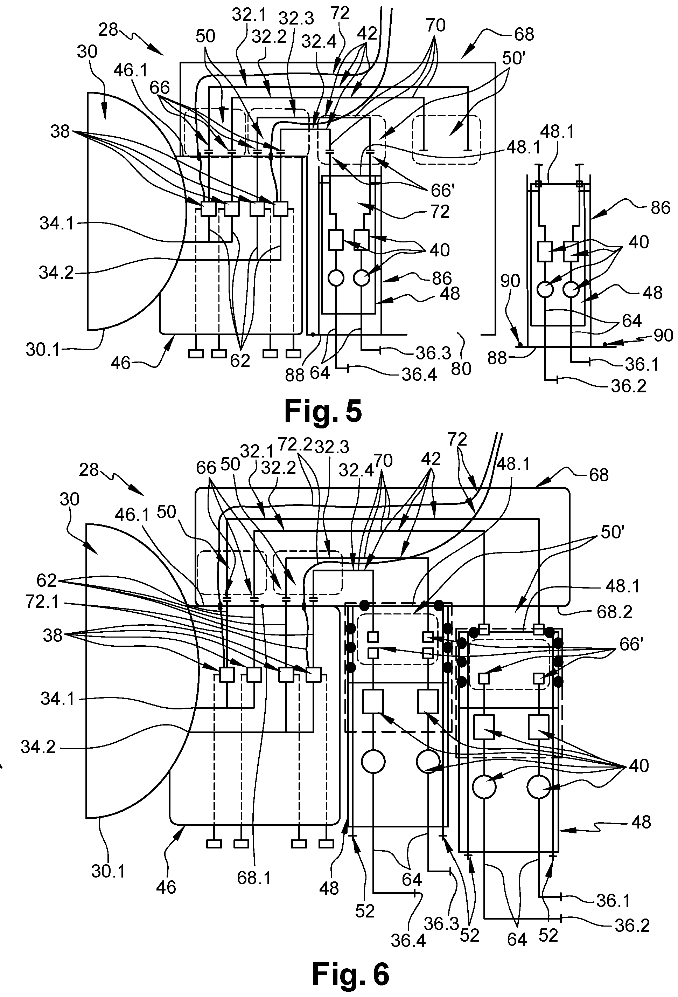

Selon un mode de réalisation visible sur la figure 6 par exemple, le dispositif d'alimentation en hydrogène 28 comprend au moins une première liaison démontable 52 permettant de maintenir le contenant aval 48 à l'état assemblé. Comme illustré sur la figure 2, le dispositif d'alimentation en hydrogène 28 peut comprendre au moins une étanchéité 54 intercalée entre les contenants amont et aval 46, 48, plus particulièrement entre les faces de jonction amont et aval 46.1, 48.1.

Selon un agencement, le contenant amont 46 est plaqué contre la paroi latérale cylindrique 30.1 du réservoir d'hydrogène 30. Selon un autre agencement, le contenant amont 46 est positionné dans le prolongement du réservoir d'hydrogène 30 et plaqué contre une paroi d'extrémité dudit réservoir d'hydrogène.

Selon une configuration, le dispositif d'alimentation en hydrogène 28 comprend un unique contenant amont 46 et deux contenants aval 48. Toutefois, l'invention n'est pas limitée à cette configuration concernant le nombre de contenants amont et aval 46, 48.

Selon les modes de réalisation visibles sur les figures 2 à 7, chaque contenant aval 48 présente une forme sensiblement parallélépipédique et une face qui correspond à la face de jonction aval 48.1. Bien entendu, l'invention n'est pas limitée à cette géométrie pour les contenants aval 48.

Selon un mode de réalisation visible sur la figure 2, le contenant amont 46 comprend un corps 56, sensiblement parallélépipédique, accolé au réservoir d'hydrogène 30 et relié à ce dernier de manière étanche au gaz ainsi qu'une extension 58 communiquant avec le corps 56 et formant avec ce dernier un décrochement 60 configuré pour loger les contenants aval 48. Ainsi, la face de l'extension 58 orientée vers le décrochement 60 forme la face de jonction amont 46.1 du contenant amont 46. Bien entendu, l'invention n'est pas limitée à cette géométrie pour le contenant amont 46. Généralement, les contenants amont et aval 46, 48 sont configurés pour obtenir un ensemble compact.

Selon une caractéristique de l'invention, au moins un des circuits d'hydrogène 32.1 à 32.4 comprend un tronçon amont 62 positionné dans un contenant amont 46, un tronçon aval 64 positionné dans un contenant aval 48 ainsi qu'un premier système de raccordement 66, reliant les tronçons amont et aval 62, 64, positionné au niveau de la zone de jonction 50 des contenants amont et aval 46, 48 lorsque ces derniers sont à l'état assemblé.

Selon une configuration, tous les circuits d'hydrogène 32.1 à 32.4 du dispositif d'alimentation en hydrogène 28 comprennent chacun un tronçon amont 62 positionné dans un contenant amont 46, un tronçon aval 64 positionné dans un contenant aval 48 ainsi qu'un premier système de raccordement 66 reliant les tronçons amont et aval 62, 64 et positionné au niveau de la zone de jonction 50 des contenants amont et aval 46, 48 lorsque ces derniers sont à l'état assemblé.

Selon un agencement, les tronçons amonts 62 de tous les circuits d'hydrogène 32.1 à 32.4 sont positionnés dans le même contenant amont 46. Les tronçons aval 64 des premier et deuxième circuits d'hydrogène 32.1, 32.2 sont positionnés dans un premier contenant aval 48 et les tronçons aval 64 des troisième et quatrième circuits d'hydrogène 32.3, 32.4 sont positionnés dans un deuxième contenant aval 48.

Selon une configuration, chaque tronçon amont 62 ne comprend aucun équipement 40 de la deuxième catégorie d'équipements. Chaque tronçon amont 62 comprend au moins un équipement 38 de la première catégorie d'équipements. En complément, chaque tronçon aval 64 comprend au moins un équipement 40 de la deuxième catégorie d'équipements. Selon un agencement, chaque tronçon aval 64 peut comprendre au moins un équipement 38 de la première catégorie d'équipements.

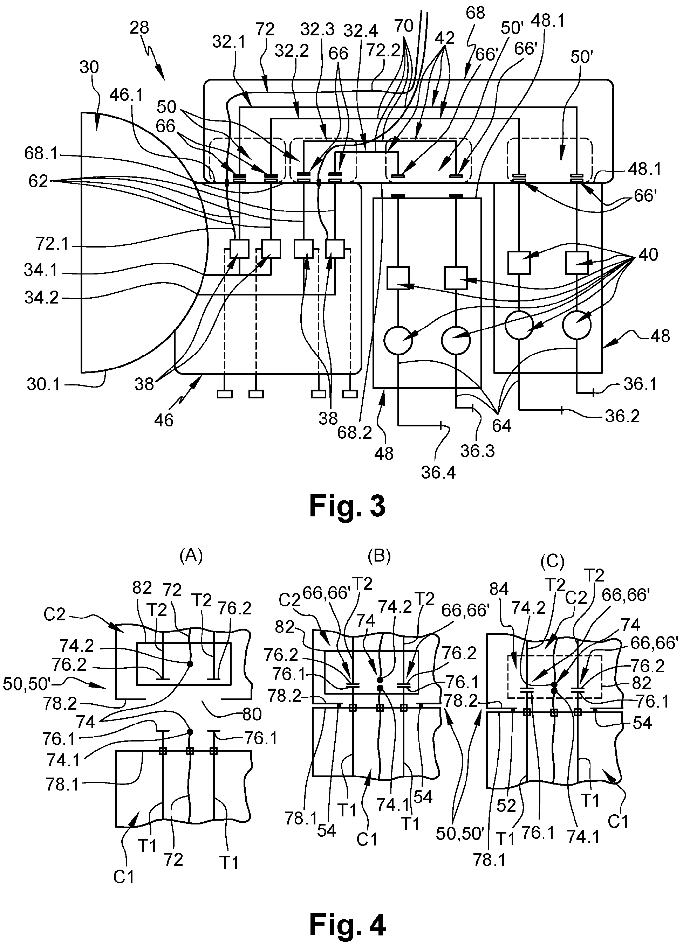

Selon des modes de réalisation visibles sur les figures 3, 5 et 6, le dispositif d'alimentation en hydrogène 28 comprend au moins un contenant intermédiaire 68 amovible et intercalé entre les contenants amont et aval 46, 48. Les contenants amont et intermédiaire 46, 68 comprennent respectivement une face de jonction amont 46.1 et une première face de jonction intermédiaire 68.1 positionnées au niveau d'une première zone de jonction 50. Les contenants aval et intermédiaire 48, 68 comprennent respectivement une face de jonction aval 48.1 et une deuxième face de jonction intermédiaire 68.2 positionnées au niveau d'une deuxième zone de jonction 50'. Les contenants amont et intermédiaire 46, 68 sont configurés pour occuper un état assemblé dans lequel les contenants amont et intermédiaire 46, 68 (et plus particulièrement la première face de jonction intermédiaire 68.1 du contenant intermédiaire 68 et la face de jonction amont 46.1 du contenant amont 46) sont rapprochés l'un de l'autre (voire en contact l'un contre l'autre) dans la première zone de jonction 50 ainsi qu'un état détaché dans lequel les contenants amont et intermédiaire 46, 68 (et plus particulièrement la première face de jonction intermédiaire 68.1 du contenant intermédiaire 68 et la face de jonction amont 46.1 du contenant amont 46) sont écartés. Les contenants aval et intermédiaire 48, 68 sont configurés pour occuper un état assemblé dans lequel les contenants aval et intermédiaire 48, 68 (et plus particulièrement la face de jonction aval 48.1 du contenant aval 48 et la deuxième face de jonction intermédiaire 68.2 du contenant intermédiaire 68) sont rapprochés l'un de l'autre (voire en contact l'un contre l'autre) dans la deuxième zone de jonction 50' ainsi qu'un état détaché dans lequel les contenants aval et intermédiaire 48, 68 (et plus particulièrement la face de jonction aval 48.1 du contenant aval 48 et la deuxième face de jonction intermédiaire 68.2 du contenant intermédiaire 68) sont écartés.

Comme les contenants amont et aval 46, 48, chaque contenant intermédiaire 68 comprend au moins une paroi délimitant une zone intérieure et une zone extérieure. Selon une configuration, chaque contenant intermédiaire 68 est étanche au gaz et contient une atmosphère de protection au moins lorsque les contenants amont, intermédiaire et aval 46, 68, 48 sont dans l'état assemblé. Cette atmosphère de protection peut être un niveau de vide poussé ou un gaz inerte par exemple.

Selon un mode de réalisation visible sur la figure 6 par exemple, le dispositif d'alimentation en hydrogène 28 comprend au moins une première liaison démontable 52 permettant de relier les contenants aval et intermédiaire 48, 68 et de les maintenir à l'état assemblé. En complément, le dispositif d'alimentation en hydrogène 28 comprend au moins une deuxième liaison démontable permettant de relier les contenants amont et intermédiaire 46, 68 et de les maintenir à l'état assemblé. Selon un mode de réalisation visible sur la figure 6 par exemple, le dispositif d'alimentation en hydrogène 28 comprend au moins une première étanchéité 54 intercalée entre les contenants aval et intermédiaire 48, 68, plus particulièrement entre la face de jonction aval 48.1 et la deuxième face de jonction intermédiaire 68.2. En complément, le dispositif d'alimentation en hydrogène 28 peut comprendre au moins une deuxième étanchéité intercalée entre les contenants amont et intermédiaire 46, 68, plus particulièrement entre la face de jonction amont 46.1 et la première face de jonction intermédiaire 68.1.

En présence d'un contenant intermédiaire 68, le contenant amont 46 est sensiblement parallélépipédique et présente une face qui correspond à la face de jonction amont 46.1. En complément, le contenant intermédiaire 68 présente une forme sensiblement périphérique. Il est positionné contre des contenants amont et aval 46, 48 et comprend une face comportant une première partie qui forme la première face de jonction intermédiaire 68.1 (en regard de la face de jonction amont 46.1) et une deuxième partie qui forme la deuxième face de jonction intermédiaire 68.2 (en regard de la face de jonction aval 48.1).

En présence d'un contenant intermédiaire 68, au moins un des circuits d'hydrogène 32.1 à 32.4 comprend un tronçon amont 62 positionné dans un contenant amont 46, un tronçon aval 64 positionné dans un contenant aval 48, un tronçon intermédiaire 70 intercalé entre les tronçons amont et aval 62, 64 et positionné dans un contenant intermédiaire 68, un premier système de raccordement 66, reliant les tronçons amont et intermédiaire 62, 70, positionné au niveau d'une première zone de jonction 50 (lorsque les contenants amont et intermédiaire 46, 68 sont à l'état assemblé) ainsi qu'un deuxième système de raccordement 66', reliant les tronçons aval et intermédiaire 64, 70, positionné au niveau d'une deuxième zone de jonction 50' (lorsque les contenants aval et intermédiaire 48, 68 sont à l'état assemblé).

Selon une configuration, tous les circuits d'hydrogène 32.1 à 32.4 du dispositif d'alimentation en hydrogène 28 comprennent chacun un tronçon amont 62 positionné dans un contenant amont 46, un tronçon aval 64 positionné dans un contenant aval 48, un tronçon intermédiaire 70 intercalé entre les tronçons amont et aval 62, 64 et positionné dans un contenant intermédiaire 68, un premier système de raccordement 66, reliant les tronçons amont et intermédiaire 62, 70, positionné au niveau d'une première zone de jonction 50 (lorsque les contenants amont et intermédiaire 46, 68 sont à l'état assemblé) ainsi qu'un deuxième système de raccordement 66', reliant les tronçons aval et intermédiaire 64, 70, positionné au niveau d'une deuxième zone de jonction 50' (lorsque les contenants aval et intermédiaire 48, 68 sont à l'état assemblé).

Selon un mode de réalisation, chaque tronçon intermédiaire 70 ne comprend que des conduits 42. Chaque tronçon intermédiaire 70 ne comprend aucun équipement 40 de la deuxième catégorie d'équipements.

Quel que soit le mode de réalisation, le dispositif d'alimentation en hydrogène 28 comprend au moins un contenant amont 46 solidaire du réservoir d'hydrogène 30 ainsi qu'au moins un contenant aval 48 amovible, les contenants amont et aval 46, 48 étant configurés pour occuper un état assemblé dans lequel les contenants amont et aval 46, 48 sont reliés (directement ou par l'intermédiaire d'un contenant intermédiaire 68), et un état détaché dans lequel les contenants amont et aval 46, 48 sont désolidarisés.

Selon une configuration visible sur les figures 2, 3, 5 et 6, le dispositif d'alimentation en hydrogène 28 comprend au moins un câble électrique 72 comportant au moins un tronçon 72.1, 72.2. Chacun de ces câbles électriques 72 présente une première extrémité reliée à un premier ou deuxième équipement 38, 40 ainsi qu'une deuxième extrémité reliée à un élément (non représenté) situé en dehors des contenants amont, aval et intermédiaire 46, 48, 68. Ainsi, chaque câble électrique 72 traverse de manière étanche la paroi d'un des contenants amont, aval et intermédiaire 46, 48, 68. Selon un agencement, un câble électrique 72 comprend plusieurs tronçons 72.1, 72.2, un tronçon pour chaque contenant parmi les contenants amont, aval et intermédiaire 46, 48, 68 dans lequel le câble électrique 72 est présent ainsi qu'un connecteur 74 reliant les tronçons deux à deux, un connecteur 74 pour chaque zone de jonction 50, 50' traversée.

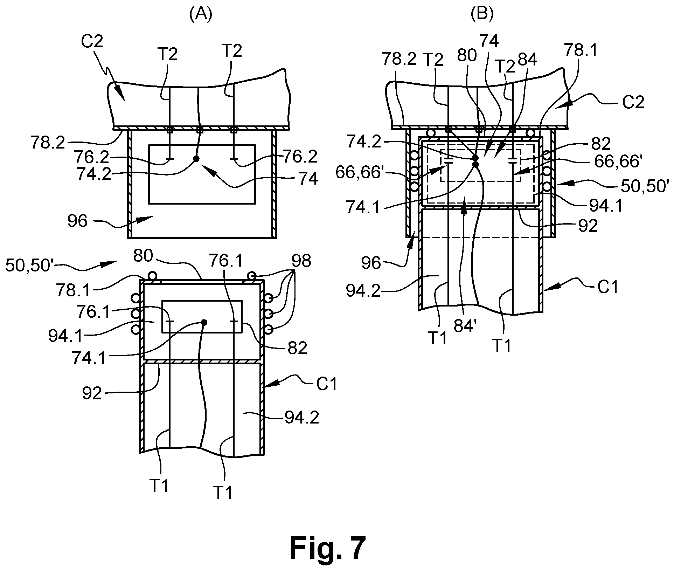

Comme illustré sur les figures 4 et 7, chaque système de raccordement 66, 66' comprend une première partie 76.1 solidaire d'un premier tronçon T1 parmi un tronçon amont 62, un tronçon aval 64 et un tronçon intermédiaire 70 ainsi qu'une deuxième partie 76.2 solidaire d'un deuxième tronçon T2 parmi un tronçon amont 62, un tronçon aval 64 et un tronçon intermédiaire 70 ; les première et deuxième parties 76.1, 76.2 étant configurées pour occuper un état connecté dans lequel elles coopèrent et assurent une continuité fluidique entre les premier et deuxième tronçons T1, T2 ainsi qu'un état déconnecté dans lequel elles sont écartées.

Chaque zone de jonction 50, 50' comprend une première paroi 78.1 appartenant à un premier contenant C1 parmi les contenants amont, aval et intermédiaire 46, 48, 68 et présentant une face qui correspond à l'une des faces parmi la face de jonction amont 46.1, la face de jonction aval 48.1, les première et deuxième faces de jonction intermédiaires 68.1, 68.2 ainsi qu'une deuxième paroi 78.1 appartenant à un deuxième contenant C2 parmi les contenants amont, aval et intermédiaire 46, 48, 68 et présentant une face qui correspond à l'une des faces parmi la face de jonction amont 46.1, la face de jonction aval 48.1, les première et deuxième faces de jonction intermédiaires 68.1, 68.2. Les première et deuxième parois 78.1, 78.2 sont rapprochées l'une de l'autre (voire en contact l'une avec l'autre) lorsque les premier et deuxième contenants C1, C2 sont à l'état assemblé.

Selon un premier mode de réalisation visible sur la figure 2, pour au moins une zone de jonction 50, 50', la première partie 76.1 de chaque système de raccordement 66, 66' est positionnée au niveau de la première paroi 78.1 et reliée de manière étanche à cette dernière. En parallèle, la deuxième partie 76.2 de chaque système de raccordement 66, 66' est positionnée au niveau de la deuxième paroi 78.2 et reliée de manière étanche à cette dernière. En complément, chaque connecteur 74 comprend une première partie 74.1 positionnée au niveau de la première paroi 78.1 et reliée de manière étanche à cette dernière ainsi qu'une deuxième partie 74.2 positionnée au niveau de la deuxième paroi 78.2 et reliée de manière étanche à cette dernière, les première et deuxième parties 74.1, 74.2 étant configurées pour occuper un premier état connecté dans lequel elles coopèrent et assurent une continuité électrique ainsi qu'un état déconnecté dans lequel elles sont écartées.

Pour au moins une zone de jonction 50, 50', les première et deuxième parties 76.1, 76.2 de chaque système de raccordement 66, 66' ainsi que les première et deuxième parties 74.1, 74.2 de chaque connecteur 74 sont agencées de manière à ce que, lorsque les contenants 46, 48, 68 associés aux première et deuxième parois 78.1, 78.2 sont à l'état assemblé, les premières et deuxièmes parties 76.1, 76.2, 74.1, 74.2 de chaque système de raccordement 66, 66' et de chaque connecteur 74 soient à l'état connecté.

Selon un autre mode de réalisation visible sur la figure 4, pour chaque système de raccordement 66, 66' d'au moins une zone de jonction 50, 50', sa première partie 76.1 est positionnée à l'extérieur du premier contenant C1 et le premier tronçon T1 relié à cette première partie 76.1 traverse de manière étanche la première paroi 78.1. En présence d'au moins un connecteur 74, sa première partie 74.1 est positionnée à l'extérieur du premier contenant C1, le câble relié à cette première partie 74.1 traversant la première paroi 78.1 de manière étanche.

En complément, pour chaque système de raccordement 66, 66', sa deuxième partie 76.2 est positionnée à l'intérieur du deuxième contenant C2. En présence d'au moins un connecteur 74, sa deuxième partie 74.2 est également positionnée à l'intérieur du deuxième contenant C2. La deuxième paroi 78.2 du deuxième contenant C2 comprend au moins un orifice traversant 80 (un orifice traversant 80 dédié à chaque système de raccordement 66, 66' et chaque connecteur 74 ou un unique orifice traversant 80 pour l'ensemble des systèmes de raccordement 66, 66' et des connecteurs 74) configuré pour permettre à la première partie de chaque système de raccordement 66, 66' et de chaque connecteur 74 de pénétrer dans le deuxième contenant C2. Pour chaque orifice traversant 80, le dispositif d'alimentation en hydrogène 28 peut comprendre une étanchéité 54 intercalée entre les première et deuxième parois 78.1, 78.2, autour de l'orifice traversant 80 considéré.

En complément, le deuxième contenant C2 comprend au moins une ouverture 82 positionnée de manière à pouvoir accéder aux systèmes de raccordement 66, 66' et aux connecteurs 74 depuis la zone extérieure du deuxième contenant C2 ainsi qu'une trappe 84 configurée pour occuper un état fermé dans lequel elle ferme de manière étanche l'ouverture 82 et un état ouvert dans lequel elle dégage l'ouverture 82.

Comme illustré sur la figure 4, pour assembler les premier et deuxième contenants C1, C2, le premier contenant C1 est positionné par rapport au deuxième contenant de manière à ce que les premières parties 76.1, 74.1 des systèmes de raccordement 66, 66' et des connecteurs 74 soient positionnées face à l'unique orifice traversant 80 ou chacune face à l'orifice traversant 80 lui étant dédié, comme illustré sur la partie (A) de la figure 4.

En suivant, les premier et deuxième contenants C1, C2 sont assemblés, puis les premières et deuxièmes parties 76.1, 74.1, 76.2, 74.2 des systèmes de raccordement 66, 66' et du (ou des) connecteur(s) 74 sont connectées, comme illustré sur la partie (B) de la figure 4. La trappe 84 étant à l'état ouvert, il est possible d'accéder aux premières et deuxièmes parties 76.1, 74.1, 76.2, 74.2 pour les connecter.

Enfin, comme illustré sur la partie (C) de la figure 4, la trappe 84 est refermée et une atmosphère de protection peut être mise en place dans le deuxième contenant C2 en réalisant un vide approprié ou en injectant un gaz inerte.

Selon une configuration visible sur la figure 3, pour les différentes zones de jonction 50, 50', le premier contenant C1 correspond au contenant amont ou aval 46, 48 et le deuxième contenant C2 correspond au contenant intermédiaire 68. Ainsi, les contenants amont et aval 46, 48 sont parfaitement étanches et contiennent chacun une atmosphère de protection. Dans la mesure où le contenant intermédiaire 68 ne contient que des conduits à double paroi et des systèmes de raccordement 66, 66' de la première catégorie d'équipements (assurant un niveau de sécurité élevé en matière de fuite d'hydrogène), il n'a pas besoin d'être parfaitement étanche et de contenir une atmosphère de protection.

Selon une autre mode de réalisation visible sur la figure 5, pour au moins une zone de jonction 50, 50', pour chaque système de raccordement 66, 66', sa première partie 76.1 est positionnée à l'extérieur du premier contenant C1 et le premier tronçon T1 relié à cette première partie 76.1 traverse de manière étanche la première paroi 78.1 du premier contenant C1. En présence d'au moins un connecteur 74, sa première partie 74.1 est positionnée à l'extérieur du premier contenant C1, le câble relié à cette première partie 74.1 traversant la première paroi 78.1 de manière étanche.

En complément, pour chaque système de raccordement 66, 66', sa deuxième partie 76.2 est positionnée à l'intérieur du deuxième contenant C2. En présence d'au moins un connecteur 74, sa deuxième partie 74.2 est positionnée à l'intérieur du deuxième contenant C2. La deuxième paroi 78.2 du deuxième contenant C2 comprend un orifice traversant 80 dimensionné pour permettre au premier contenant C1 de traverser l'orifice traversant 80 afin d'être positionné dans le deuxième contenant C2.

Selon ce mode de réalisation visible sur la figure 5, le dispositif d'alimentation en hydrogène 28 comprend au moins une structure 86 à laquelle est relié le premier contenant C1 ainsi qu'une plaque 88 solidaire de la structure 86 et configurée pour obturer de manière étanche au gaz l'orifice traversant 80 lorsque le premier contenant C1 est positionné dans le deuxième contenant C2. En variante, le dispositif d'alimentation en hydrogène ne comprend pas de structure 86 mais uniquement une plaque 88 reliée ou non au premier contenant C1 et configurée pour obturer de manière étanche au gaz l'orifice traversant 80, notamment lorsque le premier contenant C1 est positionné dans le deuxième contenant C2.

En complément, le deuxième contenant C2 comprend au moins une ouverture 82 positionnée de manière à pouvoir accéder aux systèmes de raccordement 66, 66' et aux connecteurs 74 depuis la zone extérieure du deuxième contenant C2 ainsi qu'une trappe 84 configurée pour occuper un état fermé dans lequel elle ferme de manière étanche l'ouverture 82 et un état ouvert dans lequel elle dégage l'ouverture 82.

Un joint d'étanchéité 90 peut être intercalé entre la plaque 88 et la deuxième paroi 78.2 du deuxième contenant C2, autour de l'orifice traversant 80, pour renforcer l'étanchéité.

Selon une application, le premier contenant C1 correspond au contenant aval 48 et le deuxième contenant C2 correspond au contenant intermédiaire 68. En complément, le contenant amont 46 et le contenant intermédiaire 68 sont reliés de la même manière que pour le mode de réalisation visible sur les figures 3 et 4.

Selon un autre mode de réalisation visible sur les figures 6 et 7, le premier contenant C1 comprend une cloison 92 sensiblement parallèle à la première paroi 78.1, scindant le premier contenant C1 en un premier compartiment 94.1 situé entre la cloison 92 et la première paroi 78.1 ainsi qu'un deuxième compartiment 94.2 distant de la première paroi 78.1. Tous les équipements 38, 40 positionnés dans le premier contenant C1 sont situés dans le deuxième compartiment 94.2.

Pour chaque système de raccordement 66, 66', sa première partie 76.1 est positionnée dans le premier compartiment 94.1 et le premier tronçon T1 relié à cette première partie 76.1 traverse de manière étanche la cloison 92. En présence d'un connecteur 74, la première partie 74.1 est également positionnée dans le premier compartiment 94.1, le câble relié à cette première partie 74.1 traversant la cloison 92 de manière étanche.

La première paroi 78.1 comprend au moins un orifice traversant 80 pour permettre à la deuxième partie 76.2, 74.2 de chaque système de raccordement 66, 66' et de chaque connecteur 74 du deuxième contenant C2 de pénétrer dans le premier compartiment 94.1. Le premier contenant C1 comprend au moins une première ouverture 82 positionnée de manière à pouvoir accéder, depuis la zone extérieure du premier contenant C1, aux systèmes de raccordement 66, 66' et au(x) connecteur(s) 74 situés dans le premier compartiment 94.1 ainsi qu'une première trappe 84 configurée pour occuper un état fermé dans lequel elle ferme de manière étanche la première ouverture 82 et un état ouvert dans lequel elle dégage la première ouverture 82.

En complément, pour chaque système de raccordement 66, 66', sa deuxième partie 76.2 est positionnée dans la zone extérieure du deuxième contenant C2 et le deuxième tronçon T2 traverse de manière étanche la deuxième paroi 78.2 du deuxième contenant C2. En présence d'au moins un connecteur 74, sa deuxième partie 74.2 est positionnée à l'extérieur du deuxième contenant C2, le câble relié à cette deuxième partie 74.2 traversant la deuxième paroi 78.2 de manière étanche.

Le dispositif d'alimentation en hydrogène 28 comprend, pour chaque premier contenant C1, un logement 96 solidaire du deuxième contenant C2, positionné à l'extérieur de ce dernier et dans lequel est positionnée la deuxième partie 76.2, 74.2 de chaque système de raccordement 66, 66' et de chaque connecteur 74. Le logement 96 est configuré pour loger une partie du premier contenant C1, plus particulièrement son premier compartiment 94.1. Le logement 96 comprend au moins une deuxième ouverture 82' positionnée au droit de la première ouverture 82 lorsque les premier et deuxième contenants C1, C2 sont dans l'état assemblé ainsi qu'une deuxième trappe 84' configurée pour occuper un état fermé dans lequel elle ferme de manière étanche la deuxième ouverture 82' et un état ouvert dans lequel elle dégage la deuxième ouverture 82'.

En complément, le dispositif d'alimentation en hydrogène 28 comprend au moins une étanchéité 98 intercalée entre d'une part le premier contenant C1 et d'autre part le deuxième contenant C2 et/ou le logement 96.

Comme illustré sur la figure 7, pour assembler les premier et deuxième contenants C1, C2, le premier contenant C1 est positionné face au logement 96, comme illustré sur la partie (A) de la figure 7. Les première et deuxième trappes 84, 84' sont à l'état ouvert et dégagent les première et deuxième ouvertures 82, 82'.

En suivant, le premier contenant C1 est introduit dans le logement 96 puis les premier et deuxième contenants C1, C2 sont assemblés. Les premières et deuxièmes parties 76.1, 74.1, 76.2, 74.2 de chaque système de raccordement 66, 66' et de chaque connecteur 74 sont connectées, comme illustré sur la partie (B) de la figure 7. Les première et deuxième trappes 84, 84' étant à l'état ouvert, il est possible d'accéder aux premières et deuxièmes parties 76.1, 74.1, 76.2, 74.2 de chaque système de raccordement 66, 66' et de chaque connecteur 74. Enfin, comme illustré sur la partie (C) de la figure 4, les première et deuxième trappes 84, 84' sont refermées et une atmosphère de protection est mise en place dans le premier compartiment 94.1 du premier contenant 94 en réalisant un vide approprié ou en injectant un gaz inerte.

Quel que soit le mode de réalisation, les contenants aval 48 dans lesquels sont positionnés les deuxièmes équipements 40 de la deuxième catégorie d'équipements peuvent être démontés et sortis de l'aéronef sans qu'il soit nécessaire de démonter le réservoir d'hydrogène 30. Cette solution contribue à améliorer la maintenance des contenants aval 48 et, in fine, du dispositif d'alimentation en hydrogène 28.

En présence d'un contenant intermédiaire 68, il est possible de démonter le réservoir d'hydrogène 30 et de le sortir de l'aéronef sans qu'il soit nécessaire de démonter et sortir les contenants aval 48.

Le fait de positionner les systèmes de raccordement 66, 66' et les connecteurs 74 à l'extérieur des contenants amont et aval 46, 48 permet de garantir l'étanchéité des contenants amont et aval 46 avant leur assemblage. Les conduits 42 et les systèmes de raccordement 66, 66' présents dans le contenant intermédiaire 68 étant tous configurés pour assurer un niveau de sécurité élevé en matière de fuite d'hydrogène, le contenant intermédiaire 68 n'a pas besoin de présenter une étanchéité élevée et de contenir une atmosphère de protection.

## Revendications

1. Aéronef comprenant au moins un dispositif d'alimentation en hydrogène comprenant au moins un réservoir d'hydrogène (30) assemblé à l'aéronef, au moins un circuit d'hydrogène (32.1 à 32.4) ainsi qu'au moins un contenant amont (46) solidaire du réservoir d'hydrogène (30), **caractérisé en ce que** le dispositif d'alimentation en hydrogène comprend au moins un contenant aval (48) amovible, les contenants amont et aval (46, 48) étant configurés pour occuper un état assemblé dans lequel les contenants amont et aval (46, 48) sont reliés et un état détaché dans lequel les contenants amont et aval (46, 48) sont désolidarisés ; le circuit d'hydrogène (32.1 à 32.4) comportant un tronçon amont (62) positionné dans le contenant amont (46), un tronçon aval (64) positionné dans le contenant aval (48) ainsi qu'un premier système de raccordement (66, 66') reliant les tronçons amont et aval (62, 64) lorsque les contenants amont et aval (46, 48) sont à l'état assemblé.

2. Aéronef selon la revendication 1, **caractérisé en ce que** les contenants amont et aval (46, 48) comprennent respectivement des faces de jonction amont et aval (46.1, 48.1) positionnées au niveau d'une zone de jonction (50) et rapprochées l'une de l'autre dans l'état assemblé, le premier système de raccordement (66) étant positionné à proximité de la zone de jonction (50) lorsque les contenants amont et aval (46, 48) sont à l'état assemblé.

3. Aéronef selon la revendication 1, **caractérisé en ce que** le dispositif d'alimentation en hydrogène (28) comprend au moins un contenant intermédiaire (68) amovible et intercalé entre les contenants amont et aval (46, 48), les contenants amont et intermédiaire (46, 68) étant configurés pour occuper un état assemblé dans lequel les contenants amont et intermédiaire (46, 68) sont rapprochés l'un de l'autre dans une première zone de jonction (50) ainsi qu'un état détaché dans lequel les contenants amont et intermédiaire (46, 68) sont écartés, les contenants aval et intermédiaire (48, 68) étant configurés pour occuper un état assemblé dans lequel les contenants aval et intermédiaire (48, 68) sont rapprochés l'un de l'autre dans une deuxième zone de jonction (50') ainsi qu'un état détaché dans lequel les contenants aval et intermédiaire (48, 68) sont écartés, le circuit d'hydrogène (32.1 à 32.4) comportant un tronçon intermédiaire (70) intercalé entre les tronçons amont et aval (62, 64) et positionné dans le contenant intermédiaire (68), un premier système de raccordement (66), reliant les tronçons amont et intermédiaire (62, 70), positionné au niveau de la première zone de jonction (50) ainsi qu'un deuxième système de raccordement (66'), reliant les tronçons aval et intermédiaire (64, 70), positionné au niveau de la deuxième zone de jonction (50').

4. Aéronef selon la revendication précédente, **caractérisé en ce que** le dispositif d'alimentation en hydrogène comprend au moins un câble électrique (72) comportant un tronçon (72.1, 72.2) pour chaque contenant parmi des contenants amont, aval et intermédiaire (46, 48, 68) dans lequel le câble électrique (72) est présent ainsi qu'un connecteur (74) reliant les différents tronçons (72.1, 72.2) deux à deux.

5. Aéronef selon l'une des revendications précédentes, **caractérisé en ce que** chacun des contenants amont et aval (46, 48) est étanche au gaz et contient une atmosphère de protection.

6. Aéronef selon l'une des revendications précédentes, **caractérisé en ce que**, pour au moins une zone de jonction (50, 50'), chaque système de raccordement (66, 66') comprend une première partie (76.1) solidaire d'un premier tronçon (T1) parmi un tronçon amont (62), un tronçon aval (64) et si présent un tronçon intermédiaire (70), positionné dans un premier contenant (C1) parmi un contenant amont (46), un contenant aval (48) et si présent un contenant intermédiaire (68), ainsi qu'une deuxième partie (76.2) solidaire d'un deuxième tronçon (T2) parmi un tronçon amont (62), un tronçon aval (64) et si présent un tronçon intermédiaire (70), positionné dans un deuxième contenant (C2) parmi un contenant amont (46), un contenant aval (48) et si présent un contenant intermédiaire (68) ; les première et deuxième parties (76.1, 76.2) étant configurées pour occuper un état connecté dans lequel les première et deuxième parties (76.1, 76.2) coopèrent et assurent une continuité fluidique entre les premier et deuxième tronçons (T1, T2) ainsi qu'un état déconnecté dans lequel les première et deuxième parties (76.1, 76.2) sont écartées et **en ce que** les premier et deuxième contenants (C1, C2) comprennent des première et deuxième parois rapprochées l'une de l'autre lorsque les premier et deuxième contenants (C1, C2) sont dans un état assemblé.

7. Aéronef selon la revendication précédente, **caractérisé en ce que** la première partie (76.1) de chaque système de raccordement (66, 66') est positionnée au niveau de la première paroi (78.1) et reliée de manière étanche à cette dernière et **en ce que** la deuxième partie (76.2) de chaque système de raccordement (66, 66') est positionnée au niveau de la deuxième paroi (78.2) et reliée de manière étanche à cette dernière.

8. Aéronef selon la revendication 6, **caractérisé en ce que** la première partie (76.1) de chaque système de raccordement (66, 66') est positionnée à l'extérieur du premier contenant (C1), le premier tronçon (T1) relié à la première partie (76.1) traversant de manière étanche la première paroi (78.1), et **en ce que** la deuxième partie (76.2) de chaque système de raccordement (66, 66') est positionnée à l'intérieur du deuxième contenant (C2), la deuxième paroi (78.2) du deuxième contenant (C2) comprenant au moins un orifice traversant (80) configuré pour permettre à la première partie (76.1) de chaque système de raccordement (66, 66') de pénétrer dans le deuxième contenant (C2).

9. Aéronef selon la revendication 6, **caractérisé en ce que** la première partie (76.1) de chaque système de raccordement (66, 66') est positionnée à l'extérieur du premier contenant (C1), le premier tronçon (T1) relié à la première partie (76.1) traversant de manière étanche la première paroi (78.1), **en ce que** la deuxième partie (76.2) de chaque système de raccordement (66, 66') est positionnée à l'intérieur du deuxième contenant (C2), la deuxième paroi (78.2) du deuxième contenant (C2) comprenant au moins un orifice traversant (80) configuré pour permettre au premier contenant (C1) d'être positionné dans le deuxième contenant (C2), et **en ce que** le dispositif d'alimentation en hydrogène comprend une plaque (88) configurée pour obturer de manière étanche au gaz l'orifice traversant (80).

10. Aéronef selon la revendication 8 ou 9, **caractérisé en ce que** le deuxième contenant (C2) comprend au moins une ouverture (82) positionnée de manière à pouvoir accéder aux systèmes de raccordement (66, 66') depuis une zone extérieure du deuxième contenant (C2) ainsi qu'une trappe (84) configurée pour occuper un état fermé dans lequel la trappe (84) ferme de manière étanche l'ouverture (82) et un état ouvert dans lequel la trappe (84) dégage l'ouverture (82).

11. Aéronef selon la revendication 6, **caractérisé en ce que** le premier contenant (C1) comprend une cloison (92) scindant le premier contenant (C1) en un premier compartiment (94.1) situé entre la cloison (92) et la première paroi (78.1) ainsi qu'un deuxième compartiment (94.2) distant de la première paroi (78.1), **en ce que** la première partie (76.1) de chaque système de raccordement (66, 66') est positionnée dans le premier compartiment (94.1), le premier tronçon (T1) relié à la première partie (76.1) traversant de manière étanche la cloison (92), et **en ce que** la première paroi (78.1) comprend au moins un orifice traversant (80) pour permettre à la deuxième partie (76.2) de chaque système de raccordement (66, 66') du deuxième contenant (C2) de pénétrer dans le premier compartiment (94.1).

12. Aéronef selon la revendication précédente, **caractérisé en ce que** le premier contenant (C1) comprend au moins une première ouverture (82) positionnée de manière à pouvoir accéder aux systèmes de raccordement (66, 66') depuis une zone extérieure du premier contenant (C1) ainsi qu'une première trappe (84) configurée pour occuper un état fermé dans lequel la première trappe (84) ferme de manière étanche la première ouverture (82) et un état ouvert dans lequel la première trappe (84) dégage la première ouverture (82).

13. Aéronef selon la revendication 11 ou 12, **caractérisé en ce que** le dispositif d'alimentation en hydrogène comprend, pour chaque premier contenant (C1), un logement (96) solidaire du deuxième contenant (C2) et dans lequel est positionnée la deuxième partie (76.2) de chaque système de raccordement (66, 66'), ce logement (96) étant configuré pour loger une partie du premier contenant (C1).

14. Aéronef selon les revendications 12 et 13, **caractérisé en ce que** le logement (96) comprend au moins une deuxième ouverture (82') positionnée au droit de la première ouverture (82) lorsque les premier et deuxième contenants (C1, C2) sont dans l'état assemblé ainsi qu'une deuxième trappe (84') configurée pour occuper un état fermé dans lequel la deuxième trappe (84') ferme de manière étanche la deuxième ouverture (82') et un état ouvert dans lequel la deuxième trappe (84') dégage la deuxième ouverture (82').

15. Aéronef selon la revendication 13 ou 14, **caractérisé en ce que** le dispositif d'alimentation en hydrogène comprend au moins une étanchéité (98) intercalée entre d'une part le premier contenant (C1) et d'autre part le deuxième contenant (C2) et/ou le logement (96).

## Patentansprüche

1. Luftfahrzeug mit wenigstens einer Wasserstoffversorgungsvorrichtung, die wenigstens einen mit dem Luftfahrzeug verbundenen Wasserstofftank (30), wenigstens eine Wasserstoffleitung (32.1 bis 32.4) sowie wenigstens einen mit dem Wasserstofftank (30) fest verbundenen stromaufwärts gelegenen Behälter (46) aufweist, **dadurch gekennzeichnet, dass** die Wasserstoffversorgungsvorrichtung wenigstens einen abnehmbaren stromabwärts gelegenen Behälter (48) aufweist, wobei die stromaufwärts und stromabwärts gelegenen Behälter (46, 48) so eingerichtet sind, dass sie einen zusammengebauten Zustand einnehmen, in dem die stromaufwärts und stromabwärts gelegenen Behälter (46, 48) miteinander verbunden sind, und einen abgebauten Zustand einnehmen, in dem die stromaufwärts und stromabwärts gelegenen Behälter (46, 48) voneinander getrennt sind, wobei die Wasserstoffleitung (32.1 bis 32.4) einen stromaufwärts gelegenen Abschnitt (62), der in dem stromaufwärts gelegenen Behälter (46) angeordnet ist, einen stromabwärts gelegenen Abschnitt (64), der in dem stromabwärts gelegenen Behälter (48) angeordnet ist, sowie ein erstes Verbindungssystem (66, 66') aufweist, das den stromaufwärts und den stromabwärts gelegenen Abschnitt (62, 64) verbindet, wenn sich der stromaufwärts und der stromabwärts gelegenen Behälter (46, 48) in dem zusammengebauten Zustand befinden.

2. Luftfahrzeug nach Anspruch 1, **dadurch gekennzeichnet, dass** die stromaufwärts und stromabwärts gelegenen Behälter (46, 48) jeweils stromaufwärts und stromabwärts gelegene Verbindungsflächen (46.1, 48.1) aufweisen, die in einem Verbindungsbereich (50) angeordnet sind und im zusammengebauten Zustand nahe beieinander liegen, wobei das erste Verbindungssystem (66) nahe dem Verbindungsbereich (50) angeordnet ist, wenn sich die stromaufwärts und stromabwärts gelegenen Behälter (46, 48) im zusammengebauten Zustand befinden.

3. Luftfahrzeug nach Anspruch 1, **dadurch gekennzeichnet, dass** die Wasserstoffversorgungsvorrichtung (28) wenigstens einen dazwischenliegenden Behälter (68) aufweist, der abnehmbar ist und zwischen den stromaufwärts und stromabwärts gelegenen Behältern (46, 48) angeordnet ist, wobei die stromaufwärts gelegenen und dazwischenliegende Behälter (46, 68) so eingerichtet sind, dass sie einen zusammengebauten Zustand einnehmen, in dem die stromaufwärts gelegenen und dazwischenliegenden Behälter (46, 68) in einem ersten Verbindungsbereich (50) aneinander angenähert sind, sowie einen abgebauten Zustand einnehmen, in dem die stromaufwärts gelegenen und dazwischenliegenden Behälter (46, 68) voneinander entfernt sind, wobei die stromabwärts gelegenen und dazwischenliegenden Behälter (48, 68) so eingerichtet sind, dass sie einen zusammengebauten Zustand einnehmen, in dem die stromabwärts gelegene und dazwischenliegenden Behälter (48, 68) in einem zweiten Verbindungsbereich (50') aneinander angenähert sind, sowie einen abgebauten Zustand einnehmen, in dem die stromabwärts gelegenen und dazwischenliegenden Behälter (48, 68) voneinander entfernt sind, wobei die Wasserstoffleitung (32.1 bis 32.4) einen dazwischenliegenden Abschnitt (70), der zwischen den stromaufwärts und stromabwärts gelegenen Abschnitten (62, 64) und in dem dazwischenliegenden Behälter (68) angeordnet ist, ein erstes Verbindungssystem (66), das den stromaufwärts gelgenen und den dazwischenliegenden Abschnitt (62, 70) verbindet und in dem ersten Verbindungsbereich (50) angeordnet ist, sowie ein zweites Verbindungssystem (66') aufweist, das den stromabwärts gelegenen und den dazwischenliegenden Abschnitt (64, 70) verbindet und in dem zweiten Verbindungsbereich (50') angeordnet ist.

4. Luftfahrzeug nach dem vorhergehenden Anspruch, **dadurch gekennzeichnet, dass** die Wasserstoffversorgungseinrichtung wenigstens ein elektrisches Kabel (72) mit einem Abschnitt (72.1, 72.2) für jeden Behälter unter den stromaufwärts, stromabwärts und dazwischen liegenden Behältern (46, 48, 68), in dem das elektrische Kabel (72) vorhanden ist, sowie einen Verbinder (74) aufweist, der die verschiedenen Abschnitte (72.1, 72.2) paarweise verbindet.

5. Luftfahrzeug nach einem der vorhergehenden Ansprüche, **dadurch gekennzeichnet, dass** jeder der stromaufwärts und stromabwärts gelegenen Behälter (46, 48) gasdicht ist und eine Schutzatmosphäre enthält.

6. Luftfahrzeug nach einem der vorhergehenden Ansprüche, **dadurch gekennzeichnet, dass** für wenigstens einen Verbindungsbereich (50, 50') jedes Verbindungssystem (66, 66') einen ersten Teil (76.1) aufweist, der fest mit einem ersten Abschnitt (T1) aus einem stromaufwärts gelegenen Abschnitt (62), einem stromabwärts gelegenen Abschnitt (64) und, falls vorhanden, einem dazwischenliegenden Abschnitt (70) verbunden ist, der in einem ersten Behälter (C1) aus einem stromaufwärts gelegenen Behälter (46), einem stromabwärts gelegenen Behälter (48) und, falls vorhanden, einem dazwischenliegenden Behälter (68) angeordnet ist, sowie einem zweiten Teil (76.2) aufweist, der fest mit einem zweiten Abschnitt (T2) aus einem stromaufwärts gelegenen Abschnitt (62), einem stromabwärts gelegenen Abschnitt (64) und, falls vorhanden, einem dazwischenliegenden Abschnitt (70) verbunden ist, der in einem zweiten Behälter (C2) aus einem stromaufwärts gelegenen Behälter (46), einem stromabwärts gelegenen Behälter (48) und, falls vorhanden, einem dazwischenliegenden Behälter (68) angeordnet ist; wobei der erste und der zweite Teil (76.1, 76.2) so eingerichtet sind, dass sie einen verbundenen Zustand einnehmen, in dem der erste und der zweite Teil (76.1, 76.2) zusammenwirken und eine Fluidkontinuität zwischen dem ersten und dem zweiten Abschnitt (T1, T2) sicherstellen, sowie einen unverbundenen Zustand einnehmen, in dem der erste und der zweite Teil (76.1, 76.2) beabstandet sind, und dass der erste und der zweite Behälter (C1, C2) eine erste und eine zweite Wand aufweisen, die aneinander angenähert sind, wenn sich der erste und der zweite Behälter (C1, C2) in einem zusammengebauten Zustand befinden.

7. Luftfahrzeug nach dem vorhergehenden Anspruch, **dadurch gekennzeichnet, dass** der erste Teil (76.1) jedes Verbindungssystems (66, 66') an der ersten Wand (78.1) angeordnet und dicht mit dieser verbunden ist, und dass der zweite Teil (76.2) jedes Verbindungssystems (66, 66') an der zweiten Wand (78.2) angeordnet und dicht mit dieser verbunden ist.

8. Luftfahrzeug nach Anspruch 6, **dadurch gekennzeichnet, dass** der erste Teil (76.1) jedes Verbindungssystems (66, 66') außerhalb des ersten Behälters (C1) angeordnet ist, wobei der erste Abschnitt (T1), der mit dem ersten Teil (76.1) verbunden ist, dicht durch die erste Wand (78.1) hindurchgeht, und dass der zweite Teil (76.2) jedes Verbindungssystems (66, 66') innerhalb des zweiten Behälters (C2) angeordnet ist, wobei die zweite Wand (78.2) des zweiten Behälters (C2) wenigstens eine Öffnung (80) aufweist, die so eingerichtet ist, dass der erste Teil (76.1) jedes Verbindungssystems (66, 66') in den zweiten Behälter (C2) eindringen kann.

9. Luftfahrzeug nach Anspruch 6, **dadurch gekennzeichnet, dass** der erste Teil (76.1) jedes Verbindungssystems (66, 66') außerhalb des ersten Behälters (C1) angeordnet ist, wobei der erste Abschnitt (T1), der mit dem ersten Teil (76.1) verbunden ist, dicht durch die erste Wand (78.1) hindurchgeht, dass der zweite Teil (76.2) jedes Verbindungssystems (66, 66') innerhalb des zweiten Behälters (C2) angeordnet ist, wobei die zweite Wand (78.2) des zweiten Behälters (C2) wenigstens eine Öffnung (80) aufweist, die so eingerichtet ist, dass der erste Behälter (C1) in dem zweiten Behälter (C2) angeordnet werden kann, und dass die Wasserstoffversorgungsvorrichtung eine Platte (88) umfasst, die so eingerichtet ist, dass sie die Öffnung (80) gasdicht verschließt.

10. Luftfahrzeug nach Anspruch 8 oder 9, **dadurch gekennzeichnet, dass** der zweite Behälter (C2) wenigstens eine Öffnung (82) aufweist, die so angeordnet ist, dass sie von einem äußeren Bereich des zweiten Behälters (C2) zu den Verbindungssystemen (66, 66') Zugang gewährt, sowie eine Klappe (84) umfasst, die so eingerichtet ist, dass sie einen geschlossenen Zustand einnimmt, in dem die Klappe (84) die Öffnung (82) dicht verschließt, und einen offenen Zustand einnimmt, in dem die Klappe (84) die Öffnung (82) freigibt.

11. Luftfahrzeug nach Anspruch 6, **dadurch gekennzeichnet, dass** der erste Behälter (C1) eine Trennwand (92) aufweist, die den ersten Behälter (C1) in eine erste Kammer (94.1), die sich zwischen der Trennwand (92) und der ersten Wand (78.1) befindet, sowie eine zweite Kammer (94.2) unterteilt, die von der ersten Wand (78.1) beabstandet ist, dass der erste Teil (76.1) jedes Verbindungssystems (66, 66') in der ersten Kammer (94.1) angeordnet ist, wobei der erste Abschnitt (T1), der mit dem ersten Teil (76.1) verbunden ist, dicht durch die Trennwand (92) verläuft, und dass die erste Wand (78.1) wenigstens eine Öffnung (80) aufweist, um es dem zweiten Teil (76.2) jedes Verbindungssystems (66, 66') des zweiten Behälters (C2) zu ermöglichen, in die erste Kammer (94.1) einzudringen.

12. Luftfahrzeug nach dem vorhergehenden Anspruch, **dadurch gekennzeichnet, dass** der erste Behälter (C1) wenigstens eine erste Öffnung (82) aufweist, die so angeordnet ist, dass sie von einem äußeren Bereich des ersten Behälters (C1) Zugang zu den Verbindungssystemen (66, 66') gewährt, sowie eine erste Klappe (84) aufweist, die so eingerichtet ist, dass sie einen geschlossenen Zustand einnimmt, in dem die erste Klappe (84) die erste Öffnung (82) dicht verschließt, und einen offenen Zustand einnimmt, in dem die erste Klappe (84) die erste Öffnung (82) freigibt.

13. Luftfahrzeug nach Anspruch 11 oder 12, **dadurch gekennzeichnet, dass** die Wasserstoffversorgungseinrichtung für jeden ersten Behälter (C1) eine Aufnahme (96) aufweist, die fest mit dem zweiten Behälter (C2) verbunden ist und in der der zweite Teil (76.2) jedes Verbindungssystems (66, 66') angeordnet ist, wobei diese Aufnahme (96) so eingerichtet ist, dass sie einen Teil des ersten Behälters (C1) aufnimmt.

14. Luftfahrzeug nach den Ansprüchen 12 und 13, **dadurch gekennzeichnet, dass** das Gehäuse (96) wenigstens eine zweite Öffnung (82') aufweist, die am Ort der ersten Öffnung (82) angeordnet ist, wenn sich der erste und der zweite Behälter (C1, C2) im zusammengebauten Zustand befinden, sowie eine zweite Klappe (84') aufweist, die so eingerichtet ist, dass sie einen geschlossenen Zustand einnimmt, in dem die zweite Klappe (84') die zweite Öffnung (82') dicht verschließt, und einen offenen Zustand einnimmt, in dem die zweite Klappe (84') die zweite Öffnung (82') freigibt.

15. Luftfahrzeug nach Anspruch 13 oder 14, **dadurch gekennzeichnet, dass** die Wasserstoffversorgungsvorrichtung wenigstens eine Dichtung (98) aufweist, die zwischen einerseits dem ersten Behälter (C1) und andererseits dem zweiten Behälter (C2) und/oder dem Gehäuse (96) eingefügt ist.

## Claims

1. Aircraft comprising at least one hydrogen supply device comprising at least one hydrogen tank (30) attached to the aircraft, at least one hydrogen circuit (32.1 to 32.4), as well as at least one upstream container (46) joined to the hydrogen tank (30), **characterized in that** the hydrogen supply device comprises at least one removable downstream container (48), the upstream and downstream containers (46, 48) being configured to occupy an assembled state, in which the upstream and downstream containers (46, 48) are connected, and a detached state in which the upstream and downstream containers (46, 48) are not joined; the hydrogen circuit (32.1 to 32.4) having an upstream segment (62) positioned in the upstream container (46), a downstream segment (64) positioned in the downstream container (48), as well as a first connection system (66, 66') which connects the upstream and downstream segments (62, 64) when the upstream and downstream containers (46, 48) are in the assembled state.

2. Aircraft as claimed in claim 1, wherein the upstream and downstream containers (46, 48) respectively comprise upstream and downstream junction faces (46.1, 48.1) which are positioned level with a junction zone (50) and are brought together in the assembled state, the first connection system (66) being positioned in proximity to the junction zone (50) when the upstream and downstream containers (46, 48) are in the assembled state.

3. Aircraft as claimed in claim 1, wherein the hydrogen supply device (28) comprises at least one removable intermediate container (68) interposed between the upstream and downstream containers (46, 48), the upstream and intermediate containers (46, 68) being configured to occupy an assembled state, in which the upstream and intermediate containers (46, 68) are brought together in a first junction zone (50), as well as a detached state in which the upstream and intermediate containers (46, 68) are separated, the downstream and intermediate containers (48, 68) being configured to occupy an assembled state, in which the downstream and intermediate containers (48, 68) are brought together in a second junction zone (50'), as well as a detached state in which the downstream and intermediate containers (48, 68) are separated, the hydrogen circuit (32.1 to 32.4) having an intermediate segment (70) interposed between the upstream and downstream segments (62, 64) and positioned in the intermediate container (68), a first connection system (66) which connects the upstream and intermediate segments (62, 70) and is positioned level with the first junction zone (50), as well as a second connection system (66') which connects the downstream and intermediate segments (64, 70) and is positioned level with the second junction zone (50').

4. Aircraft as claimed in the preceding claim, wherein the hydrogen supply device comprises at least one electrical cable (72) having a segment (72.1, 72.2) for each container in which the electrical cable (72) is present among the upstream, downstream and intermediate containers (46, 48, 68), as well as a connector (74) which connects the various segments (72.1, 72.2) in pairs.

5. Aircraft as claimed in one of the preceding claims, wherein each of the upstream and downstream containers (46, 48) is gas-tight and contains a protective atmosphere.

6. Aircraft as claimed in one of the preceding claims, wherein, for at least one junction zone (50, 50'), each connection system (66, 66') comprises a first part (76.1) joined to a first segment (T1) among an upstream segment (62), a downstream segment (64) and an intermediate segment (70), which is positioned in a first container (C1) among an upstream container (46), a downstream container (48) and an intermediate container (68), as well as a second part (76.2) joined to a second segment (T2) among an upstream segment (62), a downstream segment (64) and an intermediate segment (70), which is positioned in a second container (C2) among an upstream container (46), a downstream container (48) and an intermediate container (68); the first and second parts (76.1, 76.2) being configured to occupy a connected state, in which the first and second parts (76.1, 76.2) cooperate and ensure fluidic continuity between the first and second segments (T1, T2), as well as a disconnected state in which the first and second parts (76.1, 76.2) are separated, and wherein the first and second containers (C1, C2) comprise first and second walls which are brought together when the first and second containers (C1, C2) are in an assembled state.

7. Aircraft as claimed in the preceding claim, wherein the first part (76.1) of each connection system (66, 66') is positioned level with the first wall (78.1) and is connected in a leaktight manner to the latter, and wherein the second part (76.2) of each connection system (66, 66') is positioned level with the second wall (78.2) and is connected in a leaktight manner to the latter.

8. Aircrfat as claimed in claim 6, wherein the first part (76.1) of each connection system (66, 66') is positioned outside the first container (C1), the first segment (T1) connected to the first part (76.1) passing in a leaktight manner through the first wall (78.1), and wherein the second part (76.2) of each connection system (66, 66') is positioned inside the second container (C2), the second wall (78.2) of the second container (C2) comprising at least one through-orifice (80) configured to allow the first part (76.1) of each connection system (66, 66') to penetrate into the second container (C2).

9. Aircraft as claimed in claim 6, wherein the first part (76.1) of each connection system (66, 66') is positioned outside the first container (C1), the first segment (T1) connected to the first part (76.1) passing in a leaktight manner through the first wall (78.1), and wherein the second part (76.2) of each connection system (66, 66') is positioned inside the second container (C2), the second wall (78.2) of the second container (C2) comprising at least one through-orifice (80) configured to allow the first container (C1) to be positioned in the second container (C2), and wherein the hydrogen supply device comprises a plate (88) configured to seal the through-orifice (80) in a gas-tight manner.

10. Aircraft as claimed in claim 8 or 9, wherein the second container (C2) comprises at least one opening (82) positioned so as to be able to access the connection systems (66, 66') from an exterior zone of the second container (C2), as well as a hatch (84) configured to occupy a closed state, in which the hatch (84) closes the opening (82) in a leaktight manner, and an open state in which the hatch (84) uncovers the opening (82).

11. Aircraft as claimed in claim 6, wherein the first container (C1) comprises a partition (92) which divides the first container (C1) into a first compartment (94.1) located between the partition (92) and the first wall (78.1), as well as a second compartment (94.2) on the other side from the first wall (78.1), and wherein the first part (76.1) of each connection system (66, 66') is positioned in the first compartment (94.1), the first segment (T1) connected to the first part (76.1) passing in a leaktight manner through the partition (92), and wherein the first wall (78.1) comprises at least one through-orifice (80) to allow the second part (76.2) of each connection system (66, 66') of the second container (C2) to penetrate into the first compartment (94.1).

12. Aircraft as claimed in the preceding claim, wherein the first container (C1) comprises at least one first opening (82) positioned so as to be able to access the connection systems (66, 66') from an exterior zone of the first container (C1), as well as a first hatch (84) configured to occupy a closed state, in which the first hatch (84) closes the first opening (82) in a leaktight manner, and an open state in which the first hatch (84) uncovers the first opening (82).

13. Aircraft as claimed in claim 11 or 12, wherein the hydrogen supply device comprises, for each first container (C1), a housing (96) which is joined to the second container (C2) and in which the second part (76.2) of each connection system (66, 66') is positioned, this housing (96) being configured to accommodate a part of the first container (C1).

14. Aircraft as claimed in claims 12 and 13, wherein the housing (96) comprises at least one second opening (82'), which is positioned in line with the first opening (82) when the first and second containers (C1, C2) are in the assembled state, as well as a second hatch (84') configured to occupy a closed state, in which the second hatch (84') closes the second opening (82') in a leaktight manner, and an open state in which the second hatch (84') uncovers the second opening (82').

15. Aircraft as claimed in claim 13 or 14, wherein the hydrogen supply device comprises at least one gasket (98) interposed between the first container (C1) on the one hand, and on the other hand the second container (C2) and/or the housing (96).
